# EUROPEAN PATENT SPECIFICATION

(11) **EP 4 114 676 B1**
(45) Date of publication and mention of the grant of the patent: **09.12.2026**
(21) Application number: 20710132.0
(22) Date of filing: 06.03.2020
(51) Int. Cl.: B60G 13/00, F16F 9/54, F16F 9/58, F16F 3/093

(54) **STRUT INSULATOR HOUSING**
STREBENISOLATORGEHÄUSE
BOÎTIER D'ISOLATEUR DE JAMBE DE FORCE

(43) Date of publication of application: 11.01.2023
(73) Proprietor: TOYOTA JIDOSHA KABUSHIKI KAISHA, Toyota-Shi, Aichi-Ken 471-8571 (JP)
(72) Inventor: NAKAMURA, Hitoshi, 1140 Brussels (BE); KATO, Kentaro, 1140 Brussels (BE)
(74) Representative: Cabinet Beau de Loménie
(86) International application number: PCT/EP2020/056114
(87) International publication number: WO 2021/175449

(56) References cited:
- EP-A1- 2 251 218
- CN-B- 104 070 955
- FR-A1- 2 920 504
- JP-A- 2010 100 223
- US-A1- 2010 117 325
- US-A1- 2017 158 012

## Description

### FIELD

The present disclosure relates to the field of strut insulators for vehicle suspensions.

### BACKGROUND ART

Japanese patent application publication n° JP2010100223A discloses a vehicle suspension device which cooperates with a strut insulator housing in which structures for contacting the vehicle suspension device are metallic. Document US2010/0117325, which shows the preamble of claim 1, discloses another known example of bracket for mounting a shock absorber.

Documents CN104070955 B, EP2251218 A1, FR2920504 A1 and US2017/158012 A1 show other strut insulator housings.

### SUMMARY

The inventors have recognized that lightweight strut insulator housings offer advantages to vehicle performance. To that end, a strut insulator housing as defined in claim 1 is provided for a vehicle suspension.

Such a housing may offer a reduction in weight while providing adequate strength.

The housing may include a base. The base may be offset, to the first side of the transverse wall, with respect to the transverse wall, and extend radially outwards from the peripheral wall.

The polymer-containing material and insert may be arranged in the base such that the insert is separated from peripheral edges of the base by the polymer-containing material.

The housing may include one or more fastening orifices. The fastening orifices may be in the base. The insert may be arranged to at least partially surround a periphery of at least one of the one or more fastening orifices.

The housing may include an orifice in the transverse wall.

The reinforcing insert may be arranged to at least partially surround a periphery of the orifice in the transverse wall.

The polymer-containing material may be arranged to separate the insert from an interior of the orifice in the transverse wall.

The insert may comprise a metal-containing material.

A strut insulator may also be provided. The strut insulator includes a housing as described earlier herein and a bushing in the first cavity of the housing.

The strut includes a second cavity for receiving a bump stop. The second cavity is on a second side of the transverse wall, opposite to the first side of the transverse wall.

The insert is arranged in the transverse wall to at least partially separate the first cavity from the second cavity.

The insert is arranged to at least partially surround a periphery of the second cavity.

The strut insulator may include a plug for retaining the bushing in the first cavity.

A vehicle suspension may also be provided. The vehicle suspension includes damper strut and a strut insulator as described earlier herein.

A vehicle may also be provided. The vehicle includes a vehicle suspension as described earlier herein.

The strut damper may be connected to a structure of the vehicle through the strut insulator.

The housing may be connected to a strut tower panel of the vehicle.

### BRIEF DESCRIPTION OF THE DRAWINGS

The disclosure may be more completely understood in consideration of the following detailed description of aspects of the disclosure in connection with the accompanying drawings, in which:
Fig. 1 shows a vehicle including a suspension device and an strut insulator;
Fig. 2 shows a cross-sectional view the suspension device and strut insulator visible in Fig. 1;
Fig. 3 shows a cross-sectional view of a strut insulator housing visible in Fig. 2;
Fig. 4 shows a cross-sectional view of a strut insulator housing including a reinforcing insert.

The figures show non-claimed examples.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

### DETAILED DESCRIPTION

As used in this disclosure and the appended claims, the singular forms "a", "an", and "the" include plural referents unless the content clearly dictates otherwise.

The following detailed description should be read with reference to the drawings. The detailed description and the drawings, which are not necessarily to scale, depict illustrative aspects and are not intended to limit the scope of the disclosure. The illustrative aspects depicted are intended only as exemplary.

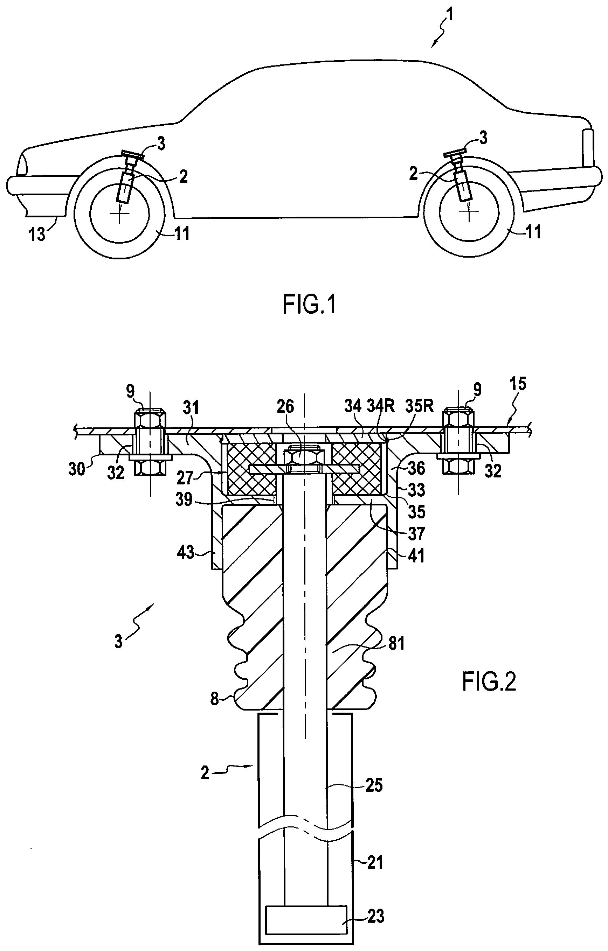

Fig. 1 shows a vehicle 1 including a vehicle suspension device 2 (for example a damper strut). The suspension device 2 connects a wheel 11 of the vehicle 1 to a vehicle structure 13 of the vehicle, such as a chassis or body of the vehicle. As a non-limiting example, a strut insulator 3 is provided to connect the suspension device 2 to a strut tower 15 formed integrally with a monocoque body of the vehicle.

Fig. 2 shows the suspension device 2 and strut insulator 3 seen in Fig. 1, both in cross-sectional view. The suspension device 2 includes a cylinder 21 connected to the wheel, a piston 23 slidable within the cylinder (represented schematically in cross-sectional view here), and a rod 25 connecting the piston to the chassis or body of the vehicle. The cylinder 21 is movable with respect to the chassis or body of the vehicle. The piston 23 and rod 25 are movable with respect to the wheel of the vehicle.

The cylinder is connected to the wheel in a conventional manner.

The strut insulator 3 includes a strut insulator housing 30. The housing 30 may be provided as a part of the suspension device 2, for example, or independently therefrom.

The rod 25 is coupled to an element of the vehicle structure - for example the strut tower 15 as indicated above - by way of the housing 30. A bushing 27 is provided to connect the rod 25 to the housing 30. The bushing 27 is connected to the rod 25 in a conventional manner.

For simplicity, no other possible additional components of the suspension device 2 are shown.

In a conventional manner, penetration of the piston 23 and rod 25 within the cylinder 21 is increased when the suspension device 2 absorbs a shock compared to when the suspension device is not absorbing a shock.

When the rod 25 is connected to the housing 30, the cylinder 21 approaches the housing during absorption of a shock.

The housing 30 includes a base 31 which is configured to be connected to the vehicle structure, and an interface portion 33 which is configured to be connected to the rod 25. When the housing 30 is attached to a surface such that the base 31 bears thereon, the interface portion 33 may be substantially flush with the base, or recessed within the base away from said surface. The interface portion 33 may extend beyond the base 31 in a direction opposite from said surface.

The base 31 and the interface portion 33 may be monolithically formed with one another. When the suspension device 2 is subjected to a shock, forces transmitted into the interface portion 33 are distributed by the base 31 during transmission into the vehicle structure.

Although the base 31 is represented as being symmetrically disposed around the interface portion 33, such a configuration is not intended to be limiting. The base 31 may be provided as a flange of any suitable shape that depends from the interface portion 33.

The housing 30 may include at least one fastening orifice 32, in which a fastener 9 is insertable to connect the housing to the vehicle structure. The fastening orifice(s) 32 may be provided in the base 31. Although two through fastening orifices 32 are shown, it is also contemplated for at least one fastening orifice to be threaded and/or for three or more fastening orifices to be provided for connecting the housing 30 to the vehicle structure.

The interface portion 33 may include a first cavity 35 for receiving the bushing 27. When the bushing 27 is arranged in the first cavity, the rod 25 may extend towards the cylinder 21 in a direction opposite from the base 31.

The first cavity 35 is bounded on one side by a transverse wall 37. The transverse wall extends radially inward from the peripheral wall, so as to be cantilevered inward therefrom. When the bushing 27 is arranged in the first cavity 35, the transverse wall 37 is arranged between the bushing 27 (on a first side of the transverse wall) and the cylinder 21 (on a second side of the transverse wall). The transverse wall 37 includes an orifice 39 through which the rod 25 is arranged when the bushing 27 is arranged in the first cavity 35. The base 31, when present, is offset to the first side of the transverse wall 37 with respect to the transverse wall.

Opposite the transverse wall 37, the first cavity 35 is bounded by a plug 34. The plug 34 may include one or more peripherally-arranged retention features 34R which are configured to cooperate with one or more corresponding retention features 35R arranged on a peripheral surface of the first cavity 35. The retention features may be provided as any conventional features used to retain a bushing within a cavity of a strut insulator housing.

The first cavity is bounded laterally by one or more peripheral walls 36 which extend between the base 31 and the transverse wall 37 of the housing 30. The aforementioned retention features 35R arranged on a peripheral surface of the first cavity 35 may be provided on the one or more peripheral walls 36 of the first cavity.

The base 31 extends radially outwards from the peripheral wall 36.

The one or more peripheral walls 36 of the first cavity 35 may be monolithically formed with the transverse wall 37.

In a conventional manner, when the suspension device 2 absorbs a shock, the cylinder 21 is made to move towards the strut insulator 3, and provide damping in the process. If no further movement of the cylinder 21 towards the strut insulator 3 is possible (for example due to maximum penetration of the piston 23 and rod 25 within the cylinder, and/or due to contact between the cylinder and the housing 30), the suspension device 2 is said to "bottom out." A shock which is able to cause a suspension device to bottom out may be known as a "maximum shock". When the shock applied to a given suspension device exceeds the suspension device's maximum shock, the suspension device is unable to provide damping for the portion of the applied shock which exceeds the maximum shock. This undamped portion of the applied shock may damage vehicle components (for example housing and/or the retention features thereof described earlier herein) and/or adversely affect vehicle occupant comfort.

In a conventional manner, a bump stop 8 may be provided as a countermeasure to the suspension device bottoming out. A bump stop may also be known as a "bump rubber", "bound stopper" or "jounce bumper".

As a non-limiting example, the bump stop 8 may form a part of the strut insulator 3, a part of the suspension device 2, or be provided as a component which is independent of the strut insulator and suspension device.

The bump stop 8 may contact the cylinder 21 prior to the piston 23 and rod 25 achieving maximum penetration within the cylinder, and/or prior to the cylinder contacting the housing 30 directly.

The bump stop 8 may be arranged to contact the interface portion 33 of the housing 30.

As the cylinder 21 bears on the bump stop 8, the bump stop absorbs energy from the cylinder while transmitting forces from the cylinder to the interface portion 33. Forces transmitted to the interface portion 33 are then transmitted to the base 31, and may then be distributed through the base as described above.

The bump stop 8 may be arranged such that when the bushing 27 is received in the first cavity 35, the bump stop is arranged between the housing 30 and the cylinder 21.

The bump stop 8 may be made of any suitable material known in the art. Although the bump stop 8 is shown as being substantially axisymmetric in form, with an axial orifice 81 through which the rod 25 may be arranged, this is not intended to be limiting. When the bump stop 8 includes an orifice 81 through which the rod 25 is to be arranged, the bump stop is arranged over an orifice in the housing 30 in which the rod is to be arranged.

For example, the bump stop 8 may be arranged on the transverse wall 37, such that the transverse wall is between the first cavity (on the first side of the transverse wall) and the bump stop (on the second side of the transverse wall, opposite the first side). The orifice 39 of the transverse wall is aligned with the orifice 81 of the bump stop 8 such that the rod 25 is arranged through both the orifice of the transverse wall 37 and the orifice of the bump stop.

As the cylinder 21 bears on the bump stop 8, forces are transmitted by the bump stop into the interface portion 33 by way of its transverse wall 37. Forces transmitted to the transverse wall 37 are transmitted through the peripheral wall(s) 36 of the first cavity 35 towards the base 31. Transmission through the peripheral wall(s) 36 of the first cavity 35 may help to prevent overloading of the plug 34 and/or of the retention features 35R of the first cavity, for example.

The interface portion 33 includes a second cavity 41 for receiving the bump stop 8. The second cavity 41 may allow the bump stop 8 to be positively positioned with respect to the housing 30 and cylinder 21. The second cavity 41 is on the second side of the transverse wall 37, opposite from the first cavity 35.

The second cavity 41 includes one or more peripheral walls 43 which are configured to surround the bump stop. When the bushing 27 is arranged in the first cavity 35, the peripheral wall(s) 43 of the second cavity 41 may extend from the transverse wall 37 in a direction towards the cylinder 21 and away from the first cavity.

The peripheral wall(s) 43 of the second cavity 41 may be monolithically formed with the transverse wall 37.

Although the bump stop 8 may help to provide damping of the portion of the applied shock which exceeds the maximum shock of the suspension device 2, a portion of the housing 30 which is in contact with the bump stop 8 may nevertheless subjected to relatively high stresses when the bump stop is contacted by the cylinder 21.

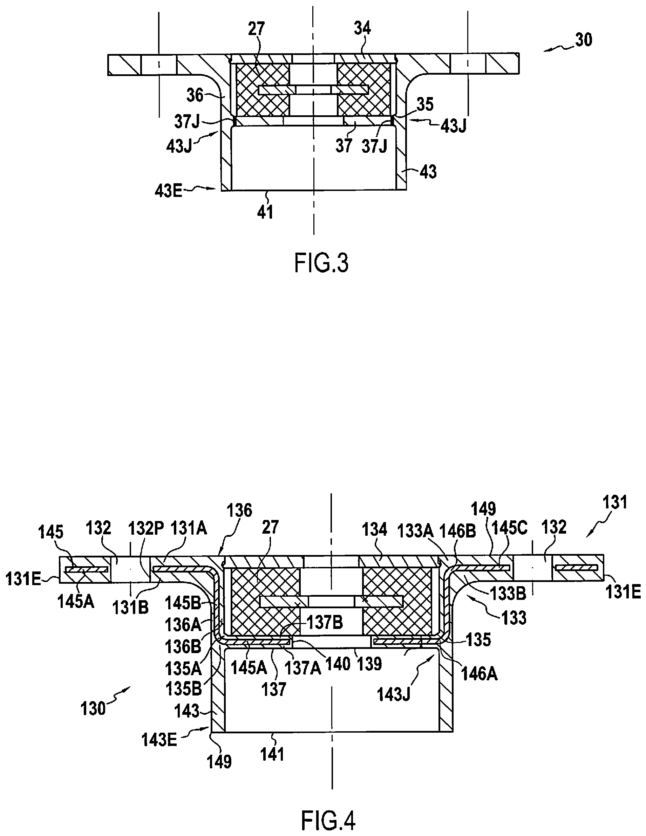

Fig. 3 shows a cross-sectional view of the housing 30 visible in Fig. 2 during loading by the bump stop. For simplicity of representation, the bump stop is not shown, but the bushing 27 is shown.

As the bump stop is contacted by the cylinder, the bump stop may cause high stresses in the transverse wall 37. If these stresses exceed the material limits of the transverse wall 37, the transverse wall fail and detach from the peripheral wall(s) 36 of the first cavity 35, allowing forces from the bump stop to be transmitted to the plug 34 (possibly via the failed transverse wall and the bushing), instead of to the peripheral wall(s) 36 of the first cavity via the transverse wall 37, which may lead to damage of the plug 34, for example. As a non-limiting example, regions of high stress in the transverse wall 37 may occur at its junction(s) 37J with the peripheral wall(s) 36 of the first cavity 35.

Additionally or alternatively, as the bump stop is contacted by the cylinder, the bump stop may cause high stresses in the peripheral wall(s) 43 of the second cavity 41. Such stresses may be caused, for example, by Poisson effect behavior of the bump stop, and/or by deflection of the housing 30 under forces applied by the bump stop. As a non-limiting example, regions of high stress in the peripheral wall(s) 43 of the second cavity may occur at an extremity 43E which is remote from the junction 43J between the peripheral wall(s) and the transverse wall 37.

To prevent failure of a housing 30 when borne upon by a bump stop, it is common to fabricate housings out of metal, particularly in regions which are in direct contact with the suspension device and/or bump stop. Accordingly, the housing 30 seen in Figs. 2 & 3 is made entirely of metal.

Fig. 4 shows a cross-sectional view of a strut insulator housing 130, which is analogous to the housing 30 seen in Figs. 2-3. Accordingly, analogous items in Fig. 4 and Figs. 2-3 are designated by reference numbers that are separated by 100. Analogous items may be understood to perform the same function as one another.

The housing 130 differs from the housing 30 seen in Figs. 2-3 in that the peripheral walls 136 of the first cavity 135 and the transverse wall 137 are made of a polymer-containing material 149 (for example a plastic) and include a reinforcing insert 145. Compared to the housing 30 seen in Figs. 2 & 3, the housing 130 seen in Fig. 4 may be lighter, while still remaining sufficiently strong to withstand being borne on by the bump stop.

The insert 145 may be provided as a sheet of a metal-containing material which is embedded within the polymer-containing material 149. The sheet may be provided as substantially flat, and then stamped to shape, for example, prior to being embedded in the polymer-containing material. It is also contemplated to provide surface texturing to the insert prior to embedding it in the polymer-containing material, to encourage bonding between the insert and the polymer-containing material.

The insert 145 is provided in the interface portion 133, so as to extend from the transverse wall 137 to the peripheral walls 136 of the first cavity 135. The transverse wall 137 includes two polymer layers 137A/B which are arranged on either side of a first portion 145A of the insert 145. A first 137A of these polymer layers is arranged towards the cylinder of the suspension device, and is borne on by the bump stop. A second 137B of these polymer layers is arranged towards the first cavity 135, and may be borne on by the bushing of the suspension device. The peripheral walls 136 of the first cavity 135 of the interface portion 133 include two polymer layers 136A/B which are arranged on either side of a second portion 145B of the insert 145. The first 145A and second 145B portions of the insert 145 are joined together so as to be monolithic with one another.

Providing the insert 145 in the peripheral walls 136 may reduce deflection of the housing 130 when borne on by the bump stop. Additionally or alternatively, providing the insert 145 in the transverse wall 137 may help it withstand contact from the bump stop.

The base 131 may also be made of the polymer-containing material 149. The insert 145 may be provided in the polymer-containing material 149 of the base 131, for example to aid in distribution of force therethrough. For example, the base 131 can be seen to include two polymer layers 131A/B which are arranged on either side of a third portion 145C of the insert 145. A first 131A of these polymer layers is arranged to bear on the vehicle structure. A second 131B of these polymer layers is arranged to be borne on by a fastener inserted in the fastening orifice(s) 132 provided in the base 131. The third portion 145C of the insert is monolithic with the second portion 145B of the insert, and extends radially away from the peripheral walls 136 of the interface portion 133.

When one or more fastening orifices 132 are provided in the base 131 for connecting the housing 130 to a vehicle structure, said fastening orifices may pierce the two polymer layers 131A/B. The third portion 145C of the insert 145 may be provided to at least partially surround the fastening orifice(s) 132. When the third portion 145C of the insert 145 surrounds the fastening orifice(s) 132, said fastening orifice(s) may additionally pierce the third portion of the insert. The first 131A and second 131B polymer layers of the base may be joined together to form a peripheral wall 132P of a given fastening orifice 132 in the base 131. The third portion 145C of the insert 145 may be separated from a faster inserted in the fastening orifice 132 by the peripheral wall 132P.

The interior of the first cavity 135 is sized to receive the bushing 27 therein.

The orifice 139 in the transverse wall 137, in which the rod of the suspension device may be arranged, pierces the two polymer layers 137A/B of the transverse wall and the first portion 145A of the insert 145. The first 137A and second 137B polymer layers may be joined together to form a peripheral wall 140 of the orifice 139 in the transverse wall 137. The first portion 145A of the insert 145 may be separated from the rod of the suspension device by the peripheral wall 140 of the orifice 139 in the transverse wall 137.

Additionally, it is contemplated to provide the insert 145 in the interface portion 133 to reinforce the second cavity 141 (when present) of the interface portion 133. According to the invention, the peripheral walls 143 of the second cavity 141 include two polymer layers which are arranged on either side of a fourth portion of the insert. A first of the two polymer layers of the peripheral walls 143 of the second cavity 141 may be arranged to contact the bump stop. A second of the two polymer layers of the peripheral walls of the second cavity may be arranged away from the bump stop.

Such a fourth portion of the insert may be monolithic with the first 145A and/or second 145B portion of the insert. However, as a non-claimed example, it is also contemplated for the fourth portion of the insert to be provided, for example as a collar near the extremity 143E of the peripheral wall 143 which is remote from the junction 143J of the peripheral wall with the transverse wall 137. Such a collar may surround the bump stop when the bump stop is received in the second cavity 141.

The polymer layers of the peripheral wall of the second cavity may be joined together at the extremity 143E of the peripheral wall 143 of the second cavity 141 which is remote from the transverse wall 137, such that a corresponding extremity of the fourth portion of the insert 145 is enclosed within said extremity of the peripheral wall of the second cavity.

Although the first 145A, second 145B, and third 145C portions of the insert 145 are each shown as being sandwiched between two polymer layers of substantially constant thickness, as measured normal to the respective portion of the insert, it is also contemplated for any given portion of the insert to be sandwiched between polymer layers of which at least one has a variable thickness.

According to the invention, a first bent portion 146A of the insert 145 is provided to link the first 145A and second 145B portions of the insert together, which is sandwiched between two polymer layers. As an example, a polymer layer 135A is arranged towards the first cavity 135, which is substantially constant in thickness as measured normal to the second bent portion, and a polymer layer 135B is arranged away from the first cavity 135, which is substantially thinner at the junction of the first bent portion 146A and the second portion 145B of the insert 145 than it is at the junction of the first bent portion 146A and the first portion 145A of the insert 145 (owing in this case to the junction 143J of the transverse wall 137 and the peripheral wall 143 of the second cavity 141).

Additionally or alternatively, although the first 145A, second 145B, and third 145C portions of the insert 145 are each shown as being sandwiched between two polymer layers which have equal thickness to one another, as measured normal to the respective portion of the insert, it is also contemplated for any given portion of an insert to be sandwiched between polymer layers which have unequal thickness to one another.

For example, a second bent portion 146B of the insert 145 can be seen to be provided to link the second 145B and third 145C portions of the insert together, which is sandwiched between two polymer layers 133A/B of unequal thickness to one another: a polymer layer 133A arranged towards the plug 134, which is the thinner of the two layers, and a polymer layer 133B arranged away from the plug, which is the thicker of the two layers.

As a non-limiting example, the insert 145 may be provided in the housing 130 by overmolding the polymer-containing material 149 over the insert 145.

The insert 145 may be fully encapsulated within the polymer layers of the housing 130. For example, the polymer layers 137A/B on either side of the first portion 145A of the insert 145 converge at the peripheral walls 140 of the orifice 139 in the transverse wall 137. Similarly, the polymer layers 131A/B on either side of the third portion 145C of the insert 145 can be seen to converge at each edge 131E of the base 131, in addition to converging at the peripheral walls 132P of the fastening orifices 132 in the base as described earlier. Encapsulation may help to discourage weathering of the insert 145 and/or separation of the polymer layers from each other and/or from the insert.

Moreover, the features recited in the described examples are not inextricably linked to one another, unless such a linkage is clearly indicated between two given features.

Throughout the description, including the claims, the term "comprising a" should be understood as being synonymous with "comprising at least one" unless otherwise stated. Throughout the description, including the claims, the term "including a" should be understood as being synonymous with "including at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A strut insulator housing (130) for a vehicle suspension, said housing comprising a peripheral wall (136) defining a central axis, and a transverse wall (137) extending radially inwards from the peripheral wall, the peripheral and transverse walls defining,
on a first side of the transverse wall, a first cavity (135) for receiving a bushing,
on a second side of the transverse wall (137) opposite to the first side along a direction defined by the central axis, a second cavity (141) for receiving a bump stop (8), said second cavity (141) comprising a peripheral wall (143) extending from the transverse wall (137) in a direction away from the first cavity (137),
the peripheral and transverse walls being formed by a polymer-containing material (149) with a reinforcing insert (145) embedded therein between two polymer layers that are joined together so as to be monolithic, **characterized in that** the insert (145) extends from the transverse wall to the peripheral wall, wherein the insert (145) comprises a first portion (145A) which extends in the transverse wall (137), the transverse wall (137) including two polymer layers (137A, 137B) arranged on either sides of the first portion (145A) of the insert (145), a second portion (145B) which extends in the peripheral wall (136), the peripheral wall (136) including two polymer layers (136A, 136B) arranged on either sides of the second portion (145B) of the insert (145), and a first bent portion (146A) which links the first portion (145A) and the second portion (145B), and wherein the peripheral wall (143) of the second cavity (141) includes two polymer layers arranged on either side of a fourth portion of the insert (145) such that the insert (145) is arranged to at least partially surround a periphery of the second cavity (141).

2. The housing (130) of claim 1 comprising a base (131) offset, to the first side of the transverse wall (137), with respect to the transverse wall, and extending radially outwards from the peripheral wall.

3. The housing of claim 2, wherein the base (131) is formed from the polymer-containing material (149) with the insert (145) embedded therein and extending from the peripheral wall to the base.

4. The housing (130) of claim 3, wherein the polymer-containing material (149) and insert (145) are arranged in the base such that the insert is separated from peripheral edges (131E) of the base (131) by the polymer-containing material.

5. The housing (130) of any of claims 3-4, comprising one or more fastening orifices (132) in the base, the insert (145) being arranged to at least partially surround a periphery of at least one of the one or more fastening orifices.

6. The housing (130) of any of claims 1-5, comprising an orifice (139) in the transverse wall (137).

7. The housing (130) of claim 6, wherein the polymer-containing material (149) is arranged to separate the insert (145) from an interior of the orifice (139) in the transverse wall (137).

8. The housing (130) of any of claims 1-7, wherein the insert (145) comprises a metal-containing material.

9. A strut insulator comprising the housing (130) of any of claims 1-8 and a bushing in the first cavity (135) of the housing.

10. The strut insulator of claim 9, comprising a plug (134) for retaining the bushing in the first cavity (135).

11. A vehicle suspension (2) comprising a damper strut with the strut insulator of claim 9 or 10.

12. A vehicle (1) comprising the vehicle suspension (2) of claim 11.

13. The vehicle (1) of claim 12, wherein the damper strut is connected to a structure of the vehicle through the strut insulator.

## Patentansprüche

1. Federbeinisolatorgehäuse (130) für eine Fahrzeugfederung, wobei das Gehäuse eine periphere Wand (136), die eine mittlere Achse definiert, und eine querliegende Wand (137), die sich von der peripheren Wand aus radial nach innen erstreckt, umfasst, wobei die periphere und die querliegende Wand Folgendes definieren
auf einer ersten Seite der querliegenden Wand, einen ersten Hohlraum (135) zum Aufnehmen einer Buchse,
auf einer zweiten Seite der querliegenden Wand (137) gegenüber der ersten Seite entlang einer Richtung, die durch die mittlere Achse definiert wird, einen zweiten Hohlraum (141) zum Aufnehmen eines Anschlagpuffers (8), wobei der zweite Hohlraum (141) eine periphere Wand (143) umfasst, die sich von der querliegenden Wand (137) aus in einer Richtung, die sich von dem ersten Hohlraum (137) entfernt, erstreckt,
wobei die periphere und die querliegende Wand durch ein polymerhaltiges Material (149) gebildet sind, in dem eine Verstärkungseinlage (145) zwischen zwei Polymerschichten, die zusammengefügt sind, um monolithisch zu sein, eingebettet ist,
**dadurch gekennzeichnet, dass** sich die Einlage (145) von der querliegenden Wand bis zu der peripheren Wand erstreckt, wobei die Einlage (145) einen ersten Abschnitt (145A) umfasst, der sich in der querliegenden Wand (137) erstreckt, wobei die querliegende Wand (137) zwei Polymerschichten (137A, 137B), die auf beiden Seiten des ersten Abschnitts (145A) der Einlage (145) angeordnet sind, einen zweiten Abschnitt (145B), der sich in der peripheren Wand (136) erstreckt, umfasst, wobei die periphere Wand (136) zwei Polymerschichten (136A, 136B), die auf beiden Seiten des zweiten Abschnitts (145B) der Einlage (145) angeordnet sind, und einen ersten gebogenen Abschnitt (146A), der den ersten Abschnitt (145A) und den zweiten Abschnitt (145B) verbindet, umfasst, und wobei die periphere Wand (143) des zweiten Hohlraums (141) zwei Polymerschichten umfasst, die auf beiden Seiten eines vierten Abschnitts der Einlage (145) angeordnet sind, so dass die Einlage (145) angeordnet ist, um eine Peripherie des zweiten Hohlraums (141) mindestens teilweise zu umgeben.

2. Gehäuse (130) nach Anspruch 1, umfassend eine Basis (131), die zu der ersten Seite der querliegenden Wand (137) im Verhältnis zu der querliegenden Wand versetzt ist und sich von der peripheren Wand aus radial nach außen erstreckt.

3. Gehäuse nach Anspruch 2, wobei die Basis (131) aus dem polymerhaltigen Material (149) gebildet ist, in dem die Einlage (145) eingebettet ist, und sich von der peripheren Wand bis zu der Basis erstreckt.

4. Gehäuse (130) nach Anspruch 3, wobei das polymerhaltige Material (149) und die Einlage (145) in der Basis derart angeordnet sind, dass die Einlage von den peripheren Rändern (131E) der Basis (131) durch das polymerhaltige Material getrennt ist.

5. Gehäuse (130) nach einem der Ansprüche 3 bis 4, umfassend eine oder mehrere Befestigungsöffnungen (132) in der Basis, wobei die Einlage (145) dazu angeordnet ist, eine Peripherie mindestens einer oder mehrerer Befestigungsöffnungen mindestens teilweise zu umgeben.

6. Gehäuse (130) nach einem der Ansprüche 1 bis 5, umfassend eine Öffnung (139) in der querliegenden Wand (137).

7. Gehäuse (130) nach Anspruch 6, wobei das polymerhaltige Material (149) dazu angeordnet ist, die Einlage (145) von einem Inneren der Öffnung (139) in der querliegenden Wand (137) zu trennen.

8. Gehäuse (130) nach einem der Ansprüche 1 bis 7, wobei die Einlage (145) ein metallhaltiges Material umfasst.

9. Federbeinisolator, umfassend das Gehäuse (130) nach einem der Ansprüche 1 bis 8 und eine Buchse in dem ersten Hohlraum (135) des Gehäuses.

10. Federbeinisolator nach Anspruch 9, umfassend einen Stöpsel (134) zum Festhalten der Buchse in dem ersten Hohlraum (135).

11. Fahrzeugfederung (2), umfassend ein Stoßdämpfer-Federbein mit dem Federbeinisolator nach Anspruch 9 oder 10.

12. Fahrzeug (1), umfassend die Fahrzeugfederung (2) nach Anspruch 11.

13. Fahrzeug (1) nach Anspruch 12, wobei das Stoßdämpfer-Federbein mit einer Struktur des Fahrzeugs über den Federbeinisolator verbunden ist.

## Revendications

1. Boîtier d'isolateur de jambe de force (130) pour une suspension de véhicule, ledit boîtier comprenant une paroi périphérique (136) définissant un axe central, et une paroi transversale (137) s'étendant radialement vers l'intérieur à partir de la paroi périphérique, les parois périphérique et transversale définissant, sur un premier côté de la paroi transversale, une première cavité (135) pour recevoir une bague, sur un deuxième côté de la paroi transversale (137) opposé au premier côté le long d'une direction définie par l'axe central, une deuxième cavité (141) pour recevoir une butée de suspension (8), ladite deuxième cavité (141) comprenant une paroi périphérique (143) s'étendant à partir de la paroi transversale (137) dans une direction opposée à la première cavité (137), les parois périphérique et transversale étant formées avec un matériau contenant un polymère (149) avec un insert de renforcement (145) intégré dans ce dernier entre deux couches polymères qui sont assemblées afin d'être monolithiques, **caractérisé en ce que** l'insert (145) s'étend à partir de la paroi transversale jusqu'à la paroi périphérique, dans lequel l'insert (145) comprend une première partie (145A) qui s'étend dans la paroi transversale (137), la paroi transversale (137) comprenant deux couches polymères (137A, 137B) agencées de chaque côté de la première partie (145A) de l'insert (145), une deuxième partie (145B) qui s'étend dans la paroi périphérique (136), la paroi périphérique (136) comprenant deux couches polymères (136A, 136B) agencées de chaque côté de la deuxième partie (145B) de l'insert (145), et une première partie pliée (146A) qui relie la première partie (145A) et la deuxième partie (145B), et dans lequel la paroi périphérique (143) de la deuxième cavité (141) comprend deux couches polymères agencées de chaque côté d'une quatrième partie de l'insert (145) de sorte que l'insert (145) est agencé pour entourer, au moins partiellement, une périphérie de la deuxième cavité (141).

2. Boîtier (130) selon la revendication 1, comprenant une base (131) décalée, sur le premier côté de la paroi transversale (137), par rapport à la paroi transversale, et s'étendant radialement vers l'extérieur à partir de la paroi périphérique.

3. Boîtier selon la revendication 2, dans lequel la base (131) est formée avec le matériau contenant un polymère (149) avec l'insert (145) intégré dans ce dernier et s'étendant à partir de la paroi périphérique jusqu'à la base.

4. Boîtier (130) selon la revendication 3, dans lequel le matériau contenant un polymère (149) et l'insert (145) sont agencés dans la base de sorte que l'insert est séparé des bords périphériques (131E) de la base (131) par le matériau contenant un polymère.

5. Boîtier (130) selon l'une quelconque des revendications 3 à 4, comprenant un ou plusieurs orifices de fixation (132) dans la base, l'insert (145) étant agencé pour entourer, au moins partiellement, une périphérie d'au moins l'un des un ou plusieurs orifices de fixation.

6. Boîtier (130) selon l'une quelconque des revendications 1 à 5, comprenant un orifice (139) dans la paroi transversale (137).

7. Boîtier (130) selon la revendication 6, dans lequel le matériau contenant un polymère (149) est agencé pour séparer l'insert (145) d'un intérieur de l'orifice (139) dans la paroi transversale (137).

8. Boîtier (130) selon l'une quelconque des revendications 1 à 7, dans lequel l'insert (145) comprend un matériau contenant un métal.

9. Isolateur de jambe de force comprenant le boîtier (130) selon l'une quelconque des revendications 1 à 8 et une bague dans la première cavité (135) du boîtier.

10. Isolateur de jambe de force selon la revendication 9, comprenant un bouchon (134) destiné à retenir la bague dans la première cavité (135).

11. Suspension de véhicule (2) comprenant une jambe de force d'amortisseur avec l'isolateur de jambe de force selon la revendication 9 ou 10.

12. Véhicule (1) comprenant la suspension de véhicule (2) selon la revendication 11.

13. Véhicule (1) selon la revendication 12, dans lequel la jambe de force d'amortisseur est raccordée à une structure du véhicule par le biais de l'isolateur de jambe de force.
